Europäisches Patentamt

European Patent Office

Office européen des brevets

(11) Veröffentlichungsnummer: **0 418 203 A1**

(12) **EUROPÄISCHE PATENTANMELDUNG**

(21) Anmeldenummer: 90810700.6

(22) Anmeldetag: 07.09.90

(51) Int. Cl.5: **G01B 21/04**, G01B 5/00, G01B 5/06

(30) Priorität: **11.09.89 CH 3301/89**

(43) Veröffentlichungstag der Anmeldung:
**20.03.91 Patentblatt 91/12**

(84) Benannte Vertragsstaaten:
**AT BE CH DE ES FR GB GR IT LI LU NL SE**

(71) Anmelder: **Weber, Hans Rudolf**
**10, chemin du Grillon**
**CH-1007 Lausanne(CH)**

(72) Erfinder: **Weber, Hans Rudolf**
**10, chemin du Grillon**
**CH-1007 Lausanne(CH)**

(74) Vertreter: **Gasser, François W.**
**Laupenstrasse 8 Postfach 6262**
**CH-3001 Bern(CH)**

(54) **Vertikal/Horizontalmessgerät und Verfahren zu dessen Betrieb.**

(57) Es wird ein Messgerät vorgeschlagen, das verglichen mit herkömmlichen Höhenmessgeräten wesentlich mehr Messmöglichkeiten aufweist. Insbesondere ermöglicht es zusätzlich zu den Messungen in der Z-Achse Messungen in der Horizontalebene, die Vermessung schräg stehender prismatischer Körper, die Bestimmung von Neigungswinkeln und die Definition von Bohrungen und Zylindern durch drei oder mehr Punkte. Durch das Zusammenwirken von zwei Messsystemen (MS1, MS2) kann die bei einer Messung zu bewegende Masse sowie die erforderliche Auflagekraft der Messsonde (10) bedeutend reduziert werden, wodurch sich das Messgerät für automatisierte Messzyklen eignet. Auf einer Säule (3) aus vorteilhafterweise keramischem Werkstoff wird ein Schlitten (6) vorteilhafterweise mittels eines Magnetlagers verschiebbar positioniert und die Verschiebung mit einem Messsystem (MS1) gemessen. Die Verschiebung der Messsonde (10) gegenüber dem Schlitten (6) wird durch zumindest ein zweites Messsystem (MS2) gemessen. Die Signale beider und gegebenenfalls weiterer Messsysteme werden einem Rechner (26) zugeleitet, der sie nach vorbestimmten Kriterien individuell oder in Abhängigkeit voneinander auswertet. Über eine normierte Schnittstelle ist das Messgerät und/oder der Rechner (26) mit einem frei programmierbaren Rechner (28) oder Peripheriegeräten verbindbar.

Fig.14

EP 0 418 203 A1

## VERTIKAL/HORIZONTALMESSGERÄT UND VERFAHREN ZU DESSEN BETRIEB

Die vorliegende Erfindung bezieht sich einerseits auf ein Vertikal/Horizontalmessgerät gemäß dem Oberbegriff des Patentanspruchs 1 und andererseits auf ein Verfahren zu dessen Betrieb gemäss dem Oberbegriff des Patentanspruchs 24.

Höhenmessgeräte, wie sie heute bekannt sind, dienen zur Messung von vertikalen Abständen zwischen Bohrungen, Wellen, Flächen, vertikalen Durchmessern von Bohrungen und Wellen, vertikalen Lageabweichungen, Geradheit, Mittenabstände, Höchst- und Tiefstpunkten von Werkstücken, oder allgemein zur Bestimmung der Koordinatenwerte von Punkten in der Z-Achse. Eine Drehung des Werkstückes um 90° und nochmalige Messung der gleichen Teile ermöglicht ausserdem Messungen in einer vertikalen Ebene Y;Z bezogen auf das Werkstück, und nach entsprechender Rechenarbeit die Darstellung der Messpunkte in kartesianischen oder Polarkoordinaten.

Höhenmessgeräte bestehen im wesentlichen aus einer auf einer horizontalen Ebene manuell frei verschiebbaren vertikalen Säule, die als Massverkörperung einen Masstab trägt sowie eine lineare Führung, auf welcher ein Schlitten in vertikaler Richtung frei bewegbar ist. Mit dem Schlitten sind ein mit dem Masstab zusammenwirkendes Messsystem und eine Sonde zur Abtastung des Werkstückes direkt oder indirekt gekoppelt.

In einer ersten bekannten Ausführungsvariante eines solchen Höhenmessgerätes sind die Messsonde, das Messsystem und der Schlitten starr miteinander verbunden. Der Schlitten ist zwecks freier Positionierbarkeit in der Höhe der Säule mit einem Gegengewicht ausbalanciert, wodurch die bewegliche Masse des Schlittens verdoppelt wird. Zur Ausführung einer Messung müssen die Massen des Schlittens und des Gegengewichtes in Richtung des zu messenden Punktes beschleunigt und wieder abgebremst werden. Bei diesem bekannten Messgerät sitzt die Sonde an einer vom Schlitten abstehenden Stange, die durch die Messkraft auf Biegung beansprucht wird und deshalb recht grob dimensioniert sein muss. Um eine annehmbare Wiederholbarkeit der Messresultate zu erreichen, muss die Messkraft mindestens ein Vielfaches der totalen Reibungskräfte des Schlittens auf seiner vertikalen Führung betragen. Führungsfehler gehen, mit einem Faktor multipliziert, der vom Abstand der Messonde von der Führung abhängt, in das Messresultat ein, da das Gerät nicht nach dem Prinzip von Abbe misst, d.h. dass sich der Messpunkt nicht in der Achse der Führung befindet.

In einer verbesserten zweiten Ausführungsvariante eines bekannten Höhenmessgerätes gemäss CH-A-668 123 sind die Messonde mit deren Gestänge und das Messsystem mit einer zusätzlichen Führung und einem zusätzlichen Gegengewicht versehen und als unabhängige Baugruppe ausgelegt und in ihrem Schwerpunkt drehbar mit dem Schlitten verbunden. Die bei einer Messung auf den Messpunkt hin zu bewegende Masse kann durch diese Massnahme auf die Masse der Baugruppe reduziert werden, was jedoch nicht ausreicht, um die Sonde problemlos und ohne grösste Vorsicht auf ein hochpräzises Werkstück abzusetzen, wie dies wünschenswert wäre. Die noch verbleibende Reibung lässt ein Absenken der Messkraft auf einen Wert, wie er zur Messung relativ weicher Materialien, wie z.B. Kunststoffe, notwendig ist, nicht zu.

In einer ebenfalls bekannten dritten Ausführungsvariante eines Höhenmessgerätes kommt die sogenannte dynamische Antastung der Messstelle zur Anwendung. Die Sonde und ihr Gestänge sind zu einer Baugruppe zusammengefasst, die sich in vertikaler Richtung relativ zum Schlitten und dessen Messsystem in gewissen Grenzen bewegen kann. Bei Überfahren einer vorbestimmten Grenzmarke wird das in diesem Augenblick ermittelte Messresultat blockiert und angezeigt. Diese Methode stellt hohe Anforderungen an die Reaktionszeit bzw. die zulässige Verfahrgeschwindigkeit des Messsystems, wenn sie wirklich dynamisch arbeiten soll. Der Dynamik stehen aber auch hier die immer noch grossen Massen von Sonde, Gestänge und deren Führungen im Wege, sodass die Methode eher als quasistatisch zu bezeichnen ist und auch hier eine sehr vorsichtige Antastung des Messpunktes Voraussetzung für eine genaue Messung ist. Zur Ermittlung von höchsten und tiefsten Punkten wird bei diesem bekannten Höhenmessgerät ein unabhängiger linearer Messtaster, verbunden mit einem Anzeigeinstrument, verwendet.

Weitere bekannte Ausführungen von Höhenmessgeräten verwenden als Sonde einen Hebeltaster, ähnlich einem Fühlhebelmesstaster, welcher bei Überfahren des Messpunktes ein Signal zur Uebernahme und Anzeige des Messwertes abgibt.

Es sind auch Messtaster bekannt, die kleine Verschiebungen in einer beliebigen Richtung in eine Verschiebung in Richtung von deren Längsachse umsetzen und diese Verschiebung messen.

Unter Verwendung eines zusätzlichen Längenmesstasters mit getrenntem Messsystem, dessen Messbereich senkrecht zu demjenigen des Höhenmessgerätes steht, lassen sich bei gewissen der bekannten Höhenmessgeräte auch die Geradheit und Parallelität von im wesentlichen senkrechten Linien ermitteln.

Bei der Messung von Durchmessern von Bohrungen oder Zylindern ist es wichtig, dass deren Durchmesser erfasst wird und nicht eine Sehne. Zu diesem Zweck wird herkömmlicherweise die Messonde samt dem oft mehr als 20 kg wiegenden Höhenmessgerät auf seiner Unterlage horizontal verschoben, bis die Messonde den höchsten bzw. tiefsten Punkt der Bohrung oder des Zylinders durchfahren hat und elektronisch deren Messwerte festgehalten sind. Besonders problematisch wird dieses Unterfangen bei der Messung kleiner Bohrungen, deren Durchmesser nicht viel gösser ist als derjenige der Messonde. In diesen Fällen besteht die Gefahr, dass die Messonde, nachdem die gesamte Masse des Höhenmessgerätes in einer Richtung beschleunigt wurde, an der gegenüberliegenden Bohrungswand anschlägt und dass das Gestänge oder die Führung eine dauernde Deformation erleiden, oder dass das Werkstück beschädigt wird, oder dass der Nullpunkt verstellt und nachfolgend falsch gemessen wird. Diese Gefahr ist dann am grössten, wenn aus irgend einem Grunde das Luftkissen, auf dem das gesamte Höhenmessgerät während der Verschiebung schwimmt, nicht richtig funktioniert, oder wenn die Beschaffenheit der Unterlage, resp. der horizontalen Bezugsfläche die Verwendung eines Luftkissens nicht zulässt.

Auf weitere Problematik, betriebliche und konstruktive Einzelheiten sowie die Ausgestaltung der Elektronik und der Software dieser bekannten Höhenmessgeräte wird hier nicht eingegangen, da dies im Zusammenhang mit der vorliegenden Erfindung nicht relevant ist und sie den Fachleuten bekannt sind.

Ausgehend von den vorbeschriebenen Nachteilen bekannter Höhenmessgeräte liegt der vorliegenden Erfindung einerseits die Aufgabe zugrunde, ein Vertikal/Horizontalmessgerät zu schaffen, das sämtliche Messmöglichkeiten bisheriger Höhenmessgeräte aufweist und dessen mit der Messonde verbundene und an den Messpunkt zu bewegende Baugruppe mit einem Minimum von Masse behaftet ist, derart, dass dessen Messonde mit nahezu beliebig kleiner Kraft an einem Messpunkt aufliegen kann. Der Schlitten soll zudem genauer geführt werden als bisher üblich und die mit ihm zusammenhängende bewegliche Masse soll kleiner sein als bei den bekannten Höhenmessgeräten. Weiter soll das erfindungsgemässe Vertikal/Horizontalmessgerät zusätzlich zu den heute verfügbaren Messmöglichkeiten weitere Messmöglichkeiten eröffnen, insbesondere Messungen in einer Horizontalebene, die Vermessung schräg stehender prismatischer Körper, die Bestimmung von Neigungswinkeln sowie die Definition von Bohrungen und Zylindern durch drei oder mehr Punkte ermöglichen. Weiter liegt der vorliegenden Erfindung die Aufgabe zugrunde, ein Verfahren zum Betrieb eines erfindungsgemässen Vertikal/Horizontalmessgerätes anzugeben.

Erfindungsgemäss wird diese Aufgabe einerseits durch ein Vertikal/Horizontalmessgerät gelöst, wie es im Patentanspruch 1 definiert ist. Andererseits durch Verfahren gemäss Ansprüchen 24 bis 27.

Die neuen Eigenschaften und konstruktiven Lösungen des erfindungsgemässen Vertikal/Horizontalmessgerätes einzeln oder gesamthaft betrachtet sowie weitere, aus der folgenden Beschreibung hervorgehende, prädestinieren das Gerät zur Automatisierung und damit zur Schaffung eines Vertikal/Horizontal-Mess-Roboters. Durch einen modularen Aufbau des erfindungsgemässen Vertikal/Horizontalmessgerätes kann besser als mit herkömmlichen Höhenmessgeräten auf verschiedenste Anforderungen und Wünsche der Anwender eingegangen werden und gewisse Module sind auch auf anderen Messmaschinen verwendbar.

Bei den hier interessierenden Messgeräten handelt es sich um solche, bei denen auf einer horizontalen Basisplatte, vorteilhafterweise mit Mitteln zur Erzeugung eines Luftkissens zwecks leichter Verschiebbarkeit auf einer horizontalen Bezugsebene ausgerüstet, ist senkrecht dazu eine vertikale Säule aufgesetzt. Parallel mit der Säule verläuft als Massverkörperung ein inkremental oder absolut kodierter Massstab, der optisch, kapazitiv, induktiv, magnetisch oder anders abgetastet wird. Als Massverkörperung kommt auch ein Laserstrahl, der mit einem Interferometer zusammenwirkt, in Frage. Die Säule enthält oder ist im wesentlichen eine genaue lineare Führung, an die hohe Anforderungen in Bezug auf Geradheit und Biegesteifigkeit gestellt sind.

Da bei gewissen Betriebsarten des erfindungsgemässen Vertikal/Horizontalmessgerätes dieses an das zu vermessende Werkstück herangeführt, also beschleunigt und über eine kurze Strecke wieder abgebremst werden muss, ist es von Bedeutung, die gesamte Masse des Gerätes möglichst gering zu halten. Dementsprechend ist es wichtig, für die Säule ein Material und einen Querschnitt zu wählen, die das bestmögliche Verhältnis von Gewicht und Biegesteifigkeit ergeben und eine genaue Führung des Schlittens ermöglichen. Unter den heute verfügbaren Materialien fällt die Wahl vorzugsweise auf keramische Werkstoffe wie Aluminiumoxyd, Siliziumkarbid, Siliziumnitrid, Zirkonoxyd, Titandiborid, Borkarbid, Aluminiumnitrid, Whiskerverstärkte Oxyde, sowie weitere und teilweise unter Markennamen erhältliche keramische Werkstoffe, ist doch deren Verhältnis von Elastizitätsmodul zu spezifischem Gewicht um mindestens einen Faktor drei höher als dasjenige von Konstruktionsstahl. Ebenso eignen sich keramische Werkstoffe bestens als Führung, da sie gefräst, geschliffen und hochgenau geläppt werden können, nicht hygroskopisch, korrosionsresistent, abriebfest und zeitlich dimensionsstabil sind. Ihr linearer thermischer Ausdehnungskoeffizient liegt tiefer als bei Stahl. Diesem Umstand kann durch konstruktive Massnahmen, die dem Fachmann bekannt sind, Rechnung getragen werden.

Eine neuartige Lagerung hat den Vorteil, dass nur zwei Flächen plangeläppt werden müssen. An die bei keramischen Werkstoffen schwer herzustellende Parallelität und Masshaltigkeit der Abstände von Flächen wird keine Anforderung gestellt. Mit Ausnahme der beiden Laufbahnen und deren eine Längsbegrenzung können sämtliche Flächen grob oder unbearbeitet bleiben.

Die Massverkörperung kann vorteilhafterweise direkt auf die Säule aufgebracht werden, derart, dass zumindest ein Teil der Keramiksäule das Substrat bildet. Im Falle eines Massstabes für kapazitive Ablesung wird auf dieses Substrat vorteilhafterweise eine elektrisch leitende Schicht aufgebracht, die nachträglich geätzt oder graviert wird. Es ist auch denkbar, das Substrat direkt selektiv mit dem Massstabmuster zu beschichten, sodass eine Aetzung oder Gravur entfällt. Gleichzeitig können leitende Zonen für eine optimale elektrostatische Abschirmung aufgebracht werden. Das Keramik Substrat hat den Vorteil, dass es nebst den erwähnten mechanischen auch günstige dielektrische Eigenschaften aufweist und sich dank seiner Oberflächenbeschaffenheit sehr gut für die Beschichtung mit leitenden Schichten eignet. Auf diese Weise lassen sich genauere und stabilere Massverkörperungen realisieren als dies mit den heute verwendeten Materialien der Fall ist. Die Integration der Massverkörperung in die Längsführung wirkt sich auf den Preis des Gerätes günstig aus, da als Massstab nicht ein zusätzliches Bauteil hergestellt und eingebaut werden muss.

Auf Grund der Tatsache, dass sich bei dieser Art von Messinstrumenten die Messsonde nicht in der Achse der Führung befinden kann, sondern immer in einer unter Umständen beachtlichen Distanz von dieser steht und Führungs sowie Taumelfehler von Wälzlagern das Messresultat verfälschen können, wird an die Qualität der Führung höchste Ansprüche gestellt. Aus diesem Grunde ist es angezeigt, für den Schlitten eine Gleitführung zu verwenden. Bekannte Gleitführungen, kombiniert mit Luftkissen und Vakuum, ergeben gute Gleiteigenschaften, Steifigkeit und Haftung, benötigen jedoch für die Haftung einen ständigen Unterdruck und damit Energie. Im Bestreben, die Masse des Schlittens möglichst gering zu halten und zumindest im Stillstand keine Energie zu verbrauchen, kann mit Vorteil ein Magnetlager verwendet werden, welches sich die hervorragenden Eigenschaften, insbesondere die hohe Energiedichte $(BH)_{max}$ moderner Permanentmagnet-Werkstoffe wie Kobalt-Seltene Erden, Samarium-Kobalt, Neodym-Eisen-Bor und andere unter den Markennamen Vacodym, Vacomax, Recoma, Refema und andere von verschiedenen Herstellern angebotenen Magneten zunutze macht. Parallel zu den Führungsflächen der Säule verlaufen Schienen aus Weicheisen, die Teil eines magnetischen Kreises bilden. Die Hochenergiemagnete, zusammen mit einer optimalen Feldlinienführung, ergeben einerseits eine einwandfreie Anpressung des Schlittens an die in einem Winkel zueinander stehenden Führungsflächen und andererseits einen Verschiebungswiderstand entsprechend der totalen Kraft der Magnete, multipliziert mit dem Reibungskoeffizienten zwischen Schlitten und Führung.

Die Reibungsflächen können beispielsweise mit PTFE oder Keramik versehen werden, um den Reibungskoeffizienten herabzusetzen.

Während der Verschiebung des Schlittens kann ein statischer Luftdruck aufgebaut werden, dessen Wirkung der Magnetkraft entgegengesetzt ist, sodass sich die Verschiebungskraft verringern oder gegebenenfalls auf quasi Null reduzieren lässt. Die Anpresskraft lässt sich durch Verändern des magnetischen Widerstandes, am einfachsten der Luftspaltlänge, in einem weiten Bereich einstellen.

Um eine schnelle, unproblematische und genaue Messung durchführen zu können, ist es, wie hiervor mehrfach erwähnt, von Bedeutung, dass die Messonde und die damit wirkverbundenen Messgerätkomponenten, mit einem Minimum von Masse behaftet sind.

Eine wesentliche Reduktion der Masse der auf einen Messpunkt hin zu beschleunigenden Messgerätkomponenten wird erfindungsgemäss durch die Verwendung von zwei getrennten Messsystemen erreicht, von denen eines die lineare Verschiebung des Schlittens auf der Säule und eines die Verschiebung der Messonde gegenüber dem Schlitten misst. Durch die Addition des Messwertes der Verschiebung des Schlittens auf der Säule und dem Wert der Verschiebung der Messonde gegenüber dem Schlitten, kann die Lage der Messonde zur Anzeige gebracht werden.

Das mit der Messonde wirkverbundene Messsystem muss spielfrei und leichtgängig gelagert sein. Es kann mit reibungsarmen Längsführungen, wie sie dem Fachmann bekannt sind, ausgerüstet sein, oder aus einem linearen Messtaster bestehen, der die Führung schon enthält. Es kann auch ein Taster verwendet werden, der in mehreren Freiheitsgraden ausgelenkt werden kann und der mehrere, vorteilhafterweise senkrecht zueinander stehende Messsysteme enthält.

Alle an einen Messtaster, hier bestehend im wesentlichen aus Messonde, Schaft, Messsystem und dessen Lagerung gestellten Anforderungen in Bezug auf geringe Masse, geringe Reibung, Spielfreiheit und Genaugkeit werden erfindungsgemäss beispielsweise durch Verwendung eines in dieser Anwendung neuen Elementes, nämlich eines Drehgebers, erfüllt.

Der Drehgeber ist mit dem Schlitten wirkverbunden, sodass die Höhenkoordinate seiner zunächst horizontal stehenden Achse genau bekannt ist. Eine im wesentlichen kugel- oder kugelsegmentförmige Messsonde ist über einen Hebelarm bekannter Länge mit der Achse des Drehgebers verbunden.

Einer Eichlage des erfindungsgemässen Vertikal/Horizontalmessgeräts, bei welcher der Drehwinkel und die Achshöhe des Drehgebers eindeutig und leicht wiederholbar mechanisch einstellbar sind, können die dieser Lage entsprechenden Eichkoordinaten zugeordnet werden. Von diesen Eichkoordinaten aus können dann Achshöhe und Drehwinkel gemessen, der Hebelarm mit der entsprechenden geometrischen Funktion des Drehwinkel multipliziert und unter Berücksichtigung der Tasterkonstanten und der Antastrichtung, als Resultat die Höhenkoordinate des angetasteten Messpunktes angezeigt, bzw. registriert werden. Die Tasterkonstante ist definiert durch den gemessenen Wert der vertikalen Verschiebung nachdem die Messsonde einmal von oben und einmal von unten an eine horizontale Fläche konstanter Höhe herangeführt wird. Sie setzt sich im wesentlichen zusammen aus dem Durchmesser der Messsonde und der Durchbiegung des Messgestänges unter dem Einfluss von Messkraft und Gewicht. Sie ist eine additive Konstante, kann aber für den Drehgeber auch eine winkel- und richtungsabhängige Komponente enthalten. Sie wird vorteilhafterweise experimentell bestimmt und im dem erfindungsgemässen Vertikal- Höhenmessgerät zugeordneten Rechner abgespeichert. Damit lassen sich auch eventuelle Linearitätsfehler des Drehgebers korrigieren.

Bei Verwendung eines Drehgebers ist die Empfindlichkeit der Messung umgekehrt proportional, der Messbereich proportional zum Hebelarm. Dies bedeutet, dass zur Messung grösserer Abstände, bei denen eine geringe Auflösung erforderlich ist, eine Messsonde mit längerem Hebelarm eingesetzt und ein entsprechend grösserer Messbereich überstrichen werden kann. Die Hebellänge wird vorteilhafterweise entweder als Konstante in den Rechner eingegeben oder experimentell ermittelt und abgespeichert. Durch eine Kodierung können verschiedene Hebelarmlängen automatisch erfasst werden.

Zur Messung an schwer zugänglichen Stellen eines Werkstückes kann erfindungsgemäss vorteilhaft ein Messkopf verwendet werden, dessen die Sonde tragender Hebelarm nicht direkt auf der Achse des Drehgebers befestiugt ist, sondern auf einer eigenen Achse in vorbestimmter Distanz zu derjenigen des Drehgebers. Die Rotationsbewegung der Sonde wird in einem vorbestimmten Verhältnis mechanisch auf den Drehgeber übertragen. Die Neigung des Messkopfes kann eingestellt werden, sodass das Messgerät zusätzlich an Messbereich gewinnt.

Zusätzlich zu den Anwendungen eines Höhenmessgerätes nach dem Stand der Technik eröffnet das erfindungsgemässe Messgerät als weitere Möglichkeit die Messung von Horizontalabständen, wie dies in der Folge beschrieben ist.

Die Achse des Drehgebers liegt zunächst horizontal. Nach Umschaltung des Rechners von vertikaler auf horizontale Messung wird das Polarkoordinatensystem des Drehgebers rechnerisch um 90° gedreht, sodass als Drehwinkel von Ausgangslage und Endlage die Komplementwinkel zu 90° berücksichtigt werden. Die Höhenkoordinaten des Schlittens und die vom Drehgeber gelieferten Polarkoordinaten, bzw. deren horizontale Komponenten werden nun getrennt angezeigt und registriert. Entsprechend der in dieser Konfiguration beschränkten Winkelbewegung ist auch der horizontale Messbereich eingeschränkt, ist jedoch für viele Messungen völlig ausreichend. Auch die Parallelität und Geradheit in Bezug zur Achse der Säule einer im wesentlichen vertikalen Linie kann mit dieser Konfiguration ermittelt werden.

Durch Drehen um 90° des mit der Messsonde verbundenen Messsystems wird dessen gesamter Messbereich in der Horizontalebene ausgenutzt. Nun können horizontale Abstände, die begrenzt sind durch parallele vertikale Flächen, gemessen werden. Die Messung von Durchmessern an Wellen und Bohrungen mit vertikaler Achse, bei der Maximum und Minimumwerte festgehalten werden müssen, bedingt eine Horizontalverschiebung längs einer geraden Linie. Dies kann dadurch erreicht werden, dass das Messgerät einem Lineal entlang verschoben wird, oder dass es auf eine horizontale Längsführung montiert wird. Diese Führung muss spielfrei und gerade sein, da Führungsfehler in das Messresultat eingehen. Die Ausrüstung der Horizontalführung mit einem zusätzlichen Messsystem, das allein oder in Kombination mit dem die Messsonde tragenden Messsystem wirkt, eröffnet neue Messmöglichkeiten und erhöht im besonderen den Messbereich in der Horizontalebene.

Dank dem Umstand, dass kein Gegengewicht verwendet wird, dass Führung und Antrieb des Schlittens sowohl in vertikaler als auch in horizontaler Lage und allen Zwischenlagen funktioniert, kann die Säule samt ihrer Basis um 90° umgelegt werden. Zu diesem Zwecke sind Abstützpunkte vorgesehen, welche die Säule parallel zu der horizontalen Bezugsebene halten. Es ist ebenfalls denkbar, die Säule um ihre nun horizontale Achse schwenkbar anzuordnen, um leichter oder überhaupt mit der Sonde in Einstiche einfahren zu können. Ein typisches Anwendungsbeispiel einer solchen Anordnung ist die Messung von Abständen an einer horizontalen Welle.

Wird nun das die Messsonde tragende Messsystem ebenfalls um 90° gedreht, sodass dessen Messebene in senkrechter Richtung aktiv ist, so können vertikale. Abstände innerhalb des Messbereiches letzteren Messsystems erfasst werden. Bei Verwendung eines Tasters mit mindestens zwei Freiheitsgraden und entsprechenden Messbereichen, können horizontale und vertikale Abstände erfasst werden, ohne den Messkopf zu drehen. Das Messgerät kann auf seiner horizontalen Bezugsebene frei verschiebbar, gegebenenfalls mittels Luftlager, oder fix in Bezug zu einem Werkstück oder einer Werkstückaufnahme, sein. Es ist selbstverständlich, dass im Zusammenhang mit linearen Messsystemen auch die gebräuchlichen Messeinsätze wie Schneiden, Flächen, Konen, Spitzen, usw. verwendet werden können.

Ein Magnetlager, das einerseits im Stillstand eine gute Haftung aufweist, andererseits in der Bewegungsphase geringe Verschiebungskräfte erfordert, ermöglicht eine motorische Verschiebung des Schlittens auf seiner Führung mit geringem Energieaufwand, was insofern wichtig ist, als dass Höhenmessgeräte zumeist mit Akkumulatoren betrieben werden. Mit der Säule in vertikaler Position muss der Antrieb ausser der Verschiebungskraft auch das Gewicht des Schlittens überwinden und für diesen Fall dimensioniert werden. Der Begriff "motorischer Antrieb" umfasst elektrische, pneumatische und hydraulische Elemente und rotative und translatorische, positions-, geschwindigkeits und programmgesteuerteMethoden und Kombinationen davon.

Um einen hohen Messkomfort zu ermöglichen, ist es vorteilhaft, den Bewegungsablauf der Messsonde zu automatisieren. Da sehr kleine Massen zu bewegen sind, ist dies mit geringem Energieaufwand und hoher Geschwindigkeit möglich. Im Falle eines Drehgebers können motorische Antriebselemente zum Anfahren vorgegebener Positionen gleichzeitig zur Erzeugung eines konstanten Drehmomentes verwendet werden. Zur Erzeugung einer konstanten Messkraft, vorteilhafterweise senkrecht zur Tangente im Berührungspunkt der Messsonde, kann es angebracht sein, das Drehmoment winkelabhängig zu steuern. Das Stellglied kann auf der Achse des Drehgebers oder als integrierender Bestandteil desselben angeordnet sein. Die Verträglichkeit von kapazitiven und optischen Messsystemen mit Stellgliedern auf elektromagnetischer oder elektrodynamischer Basis ist problemlos.

Anhand der folgenden Beschreibung, die sich auf die beiliegende Zeichnung abstützt, werden vorteilhafte Ausführungsvarianten des erfindungsgemässen Vertikal/Horizontalmessgerätes sowie gewisse Anwendungen davon, erläutert. Dabei ist zu beachten, dass die Zeichnung ohne Rücksicht auf notwendige, dem Fachmann vertraute konstruktive Details lediglich schematische und prinzipielle Darstellungen dieser Ausführungsvarianten wiedergibt.

Fig. 1a zeigt eine Seitenansicht einer vorteilhaften ersten Ausführungsvariante der Erfindung mit einem rotativen Messsystem mit horizontaler Drehachse auf einem vertikal verschiebbaren Schlitten in zwei Messstellungen,

Fig. 1b zeigt das Vertikal/Horizontalmessgerät nach Fig. 1a in teilweisem Schnitt von oben gesehen,

Fig. 2a und 2b zeigen einen Teil der Säule des erfindungsgemässen Vertikal/Horizontalmessgerätes gemäss den Fig. 1a und 1b, wobei die Drehachse des rotativen Messsystems parallel zu dem vertikal verschiebbaren Schlitten steht, von der Seite, resp. in teilweisem Schnitt von oben gesehen,

Fig. 3 und 4 zeigen eine erweiterte zweite Ausführungsvariante des Messgerätes gemäss den Fig. 1 und 2, bei der das rotative Messystem in einer Ebene senkrecht zur Verschiebungsrichtung des Schlittens auf der Säule linear verschiebbar ist,

Fig. 5 und 6 veranschaulichen eine erweiterte dritte Ausführungsvariante der Erfindung, bei der das Messystem sowohl mit vertikaler als auch mit horizontaler Drehaches um eine zweite Drehachse schwenkbar ist,

Fig. 7 zeigt ein erfindungsgemässes Vertikal/Horizontalmessgerät gemäss einer beliebigen der vorgehenden Ausführungsvarianten mit einem abgewinkelten Messtaster,

Fig. 8a zeigt eine Anwendungsmöglichkeit eines erfindungsgemässen Vertikal/Horizontalmessgerätes gemäss den Fig. 3 und 4,

Fig. 8b zeigt eine Anwendungsmöglichkeit eines erfindungsgemässen Vertikal/Horizontalmessgerätes gemäss beliebigen vorangehenden Figuren,

Fig. 9a, 9b und 9c zeigen eine besondere Ausführungsvariante eines rotativen Messytems wie es in jeder der vorerwähnten Ausführungsvarianten eines erfindungsgemässen Messgerätes verwendet werden kann,

Fig. 10 zeigt eine nochmals erweiterte vierte Ausführungsvariante der Erfindung mit zwei rotativen Messsystemen, deren Drehachsen rechtwinklig zueinander stehen,

Fig. 11a und 11b zeigen eine konstruktive Erweiterung, die mit jeder der vorbeschriebenen Ausführungsvarianten eines erfindungsgemässen Vertikal/Horizontalmessgeräte verwendet werden kann,

Fig. 12a, 12b und 12c zeigen einen Teil einer fünften Ausführungsvariante der Erfindung mit einem linearen auf dem Schlitten sitzenden Messsystem,

Fig. 13 zeigt die Vermessung eines Profiles eines Werkstückes in schematischer Darstellung,

Fig. 14. veranschaulicht ein Messgerät z.B. nach Fig. 1, mit seinem zugeordneten Service-Block, das mit einem Computer verbunden ist,

Fig. 15a, 15b und 15c zeigen weitere Anwendungsmöglichkeiten der erfindungsgemässen Vertikal/Horizontalmessgeräte mit rotativem Drehgeber für die Bestimmung von Neigungswinkeln von Flächen an Werkstücken sowie deren Abstände,

Fig. 16 zeigt, wie an einem Werkstück horizontale Abstände vertikaler Flächen gemessen werden können,

Fig. 17a und 17b zeigen die Bestimmung von Bohrungsdurchmessern sowie der Lage von deren Mittelpunkten, resp. zentralen Achsen, unter Verwendung eines Messgerätes gemäss Fig. 7,

Fig. 18 zeigt eine andere Variante der Bestimmung von Bohrungsdurchmessern und deren Mittellinien anhand von drei Messpunkten, und

Fig. 19a und 19b zeigen die Anwendung eines erfindungsgemässen Vertikal/Horizontalmessgerätes für die Vermessung eines Gewindes.

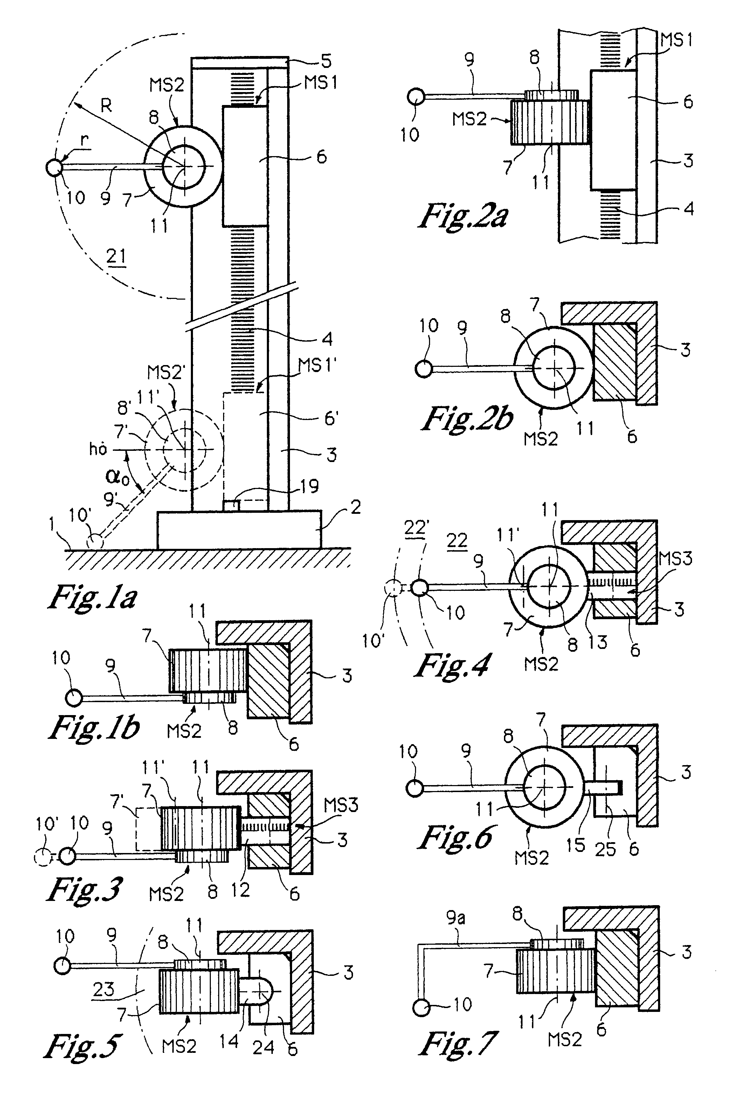

Aus Fig. 1 erkennt man eine Bezugsebene 1. Auf dieser verschiebbar angeordnet ist eine Basisplatte 2 mit einer vertikalen Säule 3. Parallel mit der Säule 3 verläuft als Massverkörperung ein inkremental oder absolut kodierter Massstab 4, der durch eine mit einem Schlitten 6 verbundene Ablesevorrichtung abtastbar ist und ein erstes Messsytem MS1 bildet. Die Säule 3 wird oben vorteilhafterweise durch eine Anschlagplatte 5 begrenzt und enthält oder ist im wesentlichen eine genaue lineare Führung für den ein zweites Messsytem MS2 tragenden Schlitten 6. Das Messsystem MS2 besteht aus einem Drehgeber 7, einem Wellenende 8 mit einer Achse 11, einem Schaft 9 und einer Messsonde 10.

Der Schlitten 6 kann die gesamte Höhe der Säule 3 verschoben werden, wobei die in der Fig. 1a gestrichelt dargestellte unterste Lage der Eichung oder Nullsetzung des Gerätes in der Z Achse dienen kann. Wenn der Schlitten $6'$ auf einem Eichanschlag 19 aufliegt, ist die Höhenkoordinate $h_0$ der Achse $11'$ des Drehgebers $7'$ mechanisch genau definiert. Wenn die Messsonde $10'$ auf der horizontalen Bezugsfläche 1 aufliegt, so ist der Winkel $_0$ zwischen ihrem Mittelpunktradius R bzw. dem Schaft $9'$ und beispielsweise der Horizontalen mechanisch ebenfalls genau definiert. Diesen mechanisch definierten Ausgangslagen der beiden Messsysteme MS1 und MS2 können nun die entsprechenden elektronischen Werte, die vorteilhafterweise im Rechner 26 abgespeichert sind, zugeordnet werden. Es ist auch denkbar, den Sondenmittelpunkt mittels einer nicht dargestellten Einstell Lehre genau auf der Höhe $h_0$ zu halten, sodass der Winkel $_0$ zu Null wird. Auch andere Winkel können als Eichlage definiert werden. Es ist auch möglich, bei Durchfahren einer Eichmarke auf den Messsystemen MS1 und MS2 den Eichwert zu übernehmen. Die automatische Übernahme eines Messwertes kann ausgelöst werden, sobald die Summe der Messwerte der Messsyteme MS1 und MS2 innerhalb einer vorbestimmten Toleranz oder während einer vorbestimmten Zeit konstant ist obwohl sich die Einzelwerte beider Messsysteme noch ändern oder wenn Messwertänderungen beider Systeme gleich gross und mit umgekehrtem Vorzeichen sind, oder wenn eine vorbestimmte Messkraft, bzw. ein Drehmoment erreicht wird. Dies ermöglicht eine sehr schnelle dynamische Antastung der Messpunkte.

Fig. 1b illustriert einen vorteilhaften Querschnitt der Säule 3 in Form eines "L" und zeigt die Anordnung des Drehgebers 7 mit seinem Schaft 9 und der damit verbundenen Messonde 10 auf dem Schlitten 6. In dieser Ansicht steht eine Messebene 21, in der die Messsonde 10 Messpunkte anfahren kann, senkrecht zur Blattebene.

Der Fachmann erkennt anhand der Fig. 1a und 1b, dass jede Höhenkoordinate der Drehachse 11 des Drehgebers 7, z.B. bezüglich der horizontalen Bezugsebene 1, aufgrund der durch das erste Messsystem MS1 ermittelten Werte bekannt ist. Die Messonde 10 ist zumindest in der Messebene 21 kreis oder kugelförmig, um unabhängig von der Neigung des Schaftes 9 einen Messpunkt abzutasten. Die sich in Abhängigkeit von der trigonometrischen Funktion des Drehwinkels verändernde Höhe der Messsonde 10 bezüglich der Drehachse 11 ist durch das zweite Messsystem MS2 bestimmt. Somit lässt sich aus einer vertikalen Lage des Schlittens 6 und einer Drehlage des Drehgebers 7 ein eindeutiger Z Wert der Messonde 10 bestimmen.

In den Fig. 2a und 2b erkennt man, dass mit dem erfindungsgemässen Vertikal/Horizontalmessgerät durch Schwenken des Drehgebers 7 und damit des zweiten Messsystems MS2 derart, dass dessen Drehachse 11 parallel zur Laufrichtung des Schlittens 6 steht, in einer durch die Z-Lage des Schlittens 6 und den Schaft 9 bestimmten, rechtwinklig zur Verschiebungsrichtung des Schlittens 6 liegenden Messebene 21 angeordnete Punkte vermessen werden können. Dabei ist die Z-Lage der durch die Messonde 10 abtastbaren Ebene durch Verschieben des Schlittens 6 bestimmt. Bei Anwendungen des Messgerätes mit vertikal liegender Drehachse 11 des Drehgebers 7, sind die beiden Messsysteme MS1 und MS2 durch den Rechner separat zu behandeln.

In den Fig. 3 und 4 ist eine zweite, mehr Messmöglichkeiten bietende Ausführungsvariante eines erfindungsgemässen Vertikal/Horizontalmessgerätes jeweils im partiellen Schnitt von oben gesehen, dargestellt. In dieser kann der Drehgeber 7 rechtwinklig zur Bewegungsrichtung des Schlittens 6 mittels einer Linearführung 12, 13 linear verschoben werden. Dadurch lassen sich, wenn der Drehgeber 7 so positioniert ist, dass seine Drehachse 11 horizontal liegt, beispielsweise an horizontal angeordneten Rundteilen deren Höchst- und Tiefstmasse und damit deren Durchmesser bestimmen. Näheres dazu wird anhand von Fig. 8a erläutert. Wenn die Linearführung 12, 13 als drittes Messsystem MS3, beispielsweise in Form eines Linearwegaufnehmers, ausgebildet ist, lassen sich zusätzlich Abstände von Messpunkten von der Säule 3 messen.

In den Fig. 5 und 6 ist eine weiter ausgebaute dritte Ausführungsvariante eines erfindungsgemässen Vertikal/Horizontalmessgerätes von oben parziell geschnitten dargestellt. Der Drehgeber 7 ist mittels einem Gelenk 14, 15 um eine Achse 24, 25 schwenkbar. Die Achse 24, 25 ist vorteilhafterweise rechtwinklig zu der Drehachse 11 des Drehgebers 7 angeordnet.

Je nach Formgebung des Werkstückes und der Lage der darauf auszumessenden Punkte kann es von Vorteil sein, anstatt eines geraden Schaftes 9 einen entsprechend geformten, beispielsweise abgewinkelten Schaft 9a zu verwenden, wie dies aus Fig. 7 ersichtlich ist. Dies ist selbstverständlich bei allen Ausführungsvarianten eines erfindungsgemässen Vertikal/Horizontalmessgerätes möglich.

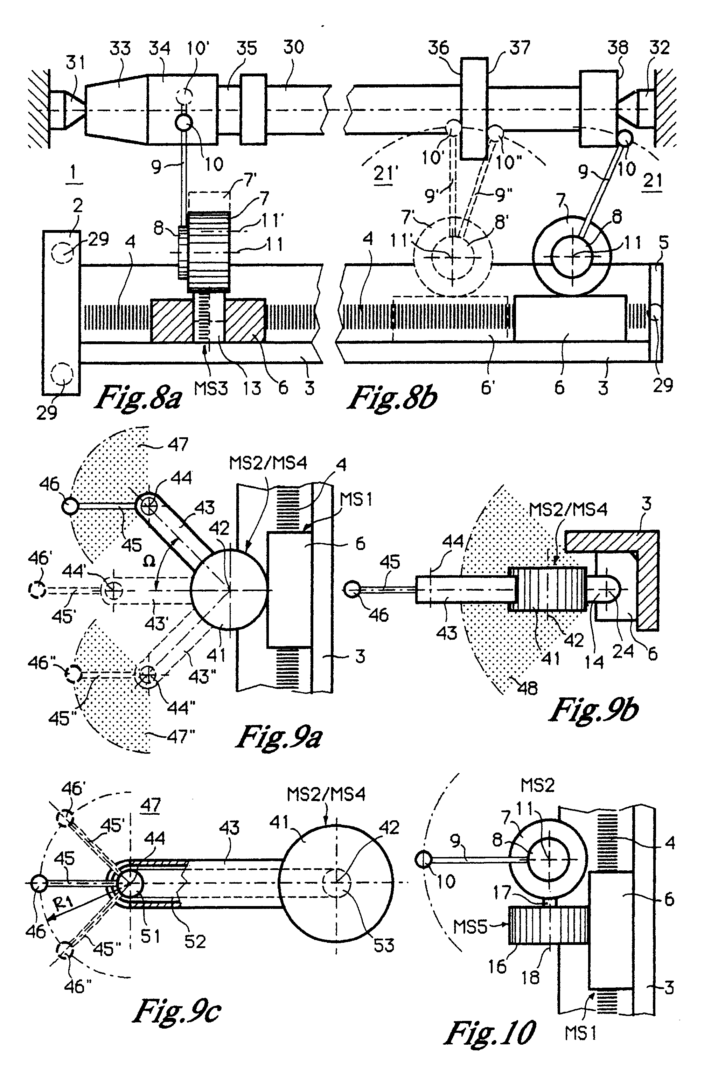

Fig. 8 zeigt eine Anwendungsvariante mit dem erfindungsgemässen Messgerät in horizontaler Lage. Als Beispiel werden an einer horizontal zwischen den Spitzen 31 und 32 eingespannten Welle 30 sowohl Durchmesser wie auch Längenabstände ermittelt. Zu diesem Zweck wird die Säule 3 auf Abstützpunkten 29 aufgelegt, sodass ihre Achse parallel zu der horizontalen Bezugsebene 1 verläuft. In Fig. 8a werden beispielsweise ein Konus 33, ein zylindrischer Teil 34 und ein Einstich 35 gemessen. Für diese Messungen liegt die Drehachse 11 des Drehgebers 7 horizontal und seine Messebene 21 steht senkrecht zur Verschiebungsrichtung des Schlittens 6. Für die Bestimmung eines Durchmessers ist es notwendig, den höchsten und den tiefsten Punkt der Mantelfläche zu erfassen, was durch Verschieben der Messonde 10 geschieht. Um zu vermeiden, dass die gesamte Masse des Messgerätes verschoben werden muss, um die höchsten und tiefsten Punkte zu durchfahren, ist zwischen dem Drehgeber 7 und dem Schlitten 6 eine Linearführung 13 angeordnet, welche die Verschiebung des Drehgebers 7 und damit der Messonde 10 längs einer geraden Linie gestattet. Für die Berechnung des Konuswinkels werden zwei Radiusmessungen in bekanntem Längsabstand von einander benötigt. Der Längsabstand wird durch die Verschiebung des Schlittens 6 ermittelt. In Fig. 8b werden beispielsweise ausgehend von einer Stirnseite 38 der Welle 30 die Längsabstände zu einer linken Flanke 36 und zu einer rechten Flanke 37 gemessen. Zu diesem Zweck wird nun der auf dem Schlitten 6 befestigte Drehgeber 7 so gedreht, dass dessen Drehachse 11 vertikal, und dessen Messebene 21 horizontal zu liegen kommen. Die Längsabstände können berechnet werden aus der Verschiebung des Schlittens 6 und der Winkelinformation des Drehgebers 7 unter Berücksichtigung vorgegebener Konstanten sowie der Antastrichtung. In einer nicht dargestellten Ausführungsvariante kann es vorteilhaft sein, die Säule 3 um ihre Achse schwenkbar zu gestalten oder anzuordnen. Es ist auch denkbar, mehrere Schlitten und Messsysteme auf der Säule 3 anzuordnen. Für die Lösung eines komplexen Messproblems können mehrere Säulen mit verschiedenen Messaufbauten eingesetzt werden.

Fig. 9a zeigt einen Teil der Säule 3 mit Masstab 4, den Schlitten 6 mit damit wirkverbundenem Messkopf, der vorteilhafterweise zur Messung an schwer zugänglichen Stellen eingesetzt werden kann. Fig. 9c zeigt eine Messonde 46, die an einem Schaft 45 befestigt und um eine Achse 44 im Radius $R_1$ drehbar gelagert ist. Auf der gleichen Achse 44 drehbar ist ein Zylinder 51 fest mit dem Schaft 45 verbunden. Ein Arm 43 enthält an seinem einen Ende die Lagerung der Achse 44. Sein anderes Ende ist fest mit dem Gehäuse eines Drehgebers 41 verbunden. Auf einer Drehachse 42 des Drehgebers 41 ist ein Zylinder 53 (Fig. 9c) drehfest mit dem beweglichen Teil des Drehgebers 41 verbunden. Jede Bewegung der Messonde 46 um die Achse 44 und in einer Messebene 47 wird mittels eines Bandes 52 vom Zylinder 51 auf einen Zylinder 53 und somit auf die Drehachse 42 des Drehgebers 41 übertragen. Auf die Drehachse 42 des Drehgebers 41 können in der Zeichnung nicht dargestellte Mittel zur Erzeugung eines Drehmomentes, bzw. einer Messkraft, wirken, welche über den Zylinder 53, das Band 52, den Zylinder 51 und den Schaft 45 auf die Messonde 46 übertragen werden können. Das Gehäuse des Drehgebers 41 mit dem Arm 43 ist auf dem Schlitten 6 drehbar befestigt und kann in vorbestimmtem oder beliebigem Winkel Ω arretiert werden. In einer weiteren Ausführungsvariante kann der Winkel Ω mit einem zusätzlichen Drehgeber gemessen und bei der Berechnung der Koordinaten der Messsonde 46 berücksichtigt werden.

Fig. 9b zeigt in einer weiteren Ausführungsvariante die Säule 3, den Schlitten 6 und den Messkopf von oben. Dieser ist über ein Gelenk 14 mit vertikal stehender Achse 24 in einer horizontalen Ebene 48 schwenkbar mit dem Schlitten 6 verbunden. In einer nicht dargestellten Ausführungsvariante kann die Achse 24 horizontal angeordnet sein.

Wenn in einer weiter ausgebauten Ausführungsvariante eines erfindungsgemässen Vertikal/Horizontalmessgerätes die Schwenkung des Armes 43 um die Drehachse 42 durch ein separates rotatives Messsystem MS4, beispielsweise in Form eines separaten Drehgebers, gemessen wird, ergeben sich weitere Anwendungsmöglichkeiten für das erfindungsgemässe Vertikal/Horizontalmessgerät Selbstverständlich ist auch bei den anhand der Fig. 9 beschriebenen Ausführungsvarianten eines erfindungsgemässen Vertikal/Horizontalmessgerätes der Drehgeber 41 senkrecht' zu seiner Drehachse 42 schwenkbar, derart, dass eine Drehung der Messsonde 46 um die Achse 44 sowohl die Vermessung von in einer vertikalen Messebene 47 als auch in einer horizontalen Messebene liegenden Messpunkten ermöglicht. Hier wie bei den weiter oben beschriebenen Ausführungsvarianten eines erfindungsgemässen Vertikal/Horizontalmessgerätes kann der Drehgeber 41 ebenfalls linear verschiebbar mit dem Schlitten 6 verbunden sein, wobei diese Verschiebung wiederum gemessen oder ungemessen erfolgen kann. Selbstverständlich können die Schwenkbarkeit des Drehgebers 41 mit dessen linearen Verschiebbarkeit verbunden werden. In all diesen Fällen ist es vorteilhaft, wenn der Rechner 26 die von den diversen Messsystemen MS1, MS2, MS3 und MS4 erzeugten Signale individuell und in vorbestimmter Abhängigkeit voneinander erfassen und auswerten kann.

Anstelle der in den Fig. 5, 6 und 9b illustrierten Gelenkhebel 14 und 15 zur ungemessenen Schwenkung des Drehgebers 7, 41 um die Achse 24 kann, gemäss Fig. 10, ein zweiter Drehgeber 16 mit einem fünften Messsystem MS5 verwendet werden, auf dessen Welle 17 der Drehgeber 7, 41 so montiert wird, dass seine Drehachse 11, 42 senkrecht zu der Drehachse 18 des zweiten Drehgebers 16 steht. Die Messsonde 10 kann sich in dieser Ausführungsvariante der Erfindung sowohl in einer vertikalen als auch in einer horizontalen Messebene sowie mit dem Schlitten 6 auf der Säule 3 verschieben. Die Komponenten von Verschiebungen in gleicher Richtung werden dabei durch den Rechner 26 vektoriell addiert. Als effektiver Hebelarm muss dabei die Projektion der Länge des Schaftes 9 berücksichtigt werden. Selbstverständlich können anstelle des in Fig. 10 dargestellten Drehgebers 7 mit dem Messsystem MS2 auch alle anderen weiter oben beschriebenen Ausführungsvarianten dieser Gerätkomponente auf die Welle 17 des zweiten Drehgebers 16 montiert werden. Durch diese konstruktive Erweiterung des erfindungsgemässen Vertikal/Horizontalmessgerätes lassen sich eine ganze Reihe zusätzlicher Messungen von Punkten im Raum ausführen, die mit den herkömmlichen Höhenmessgeräten nicht durchführbar sind.

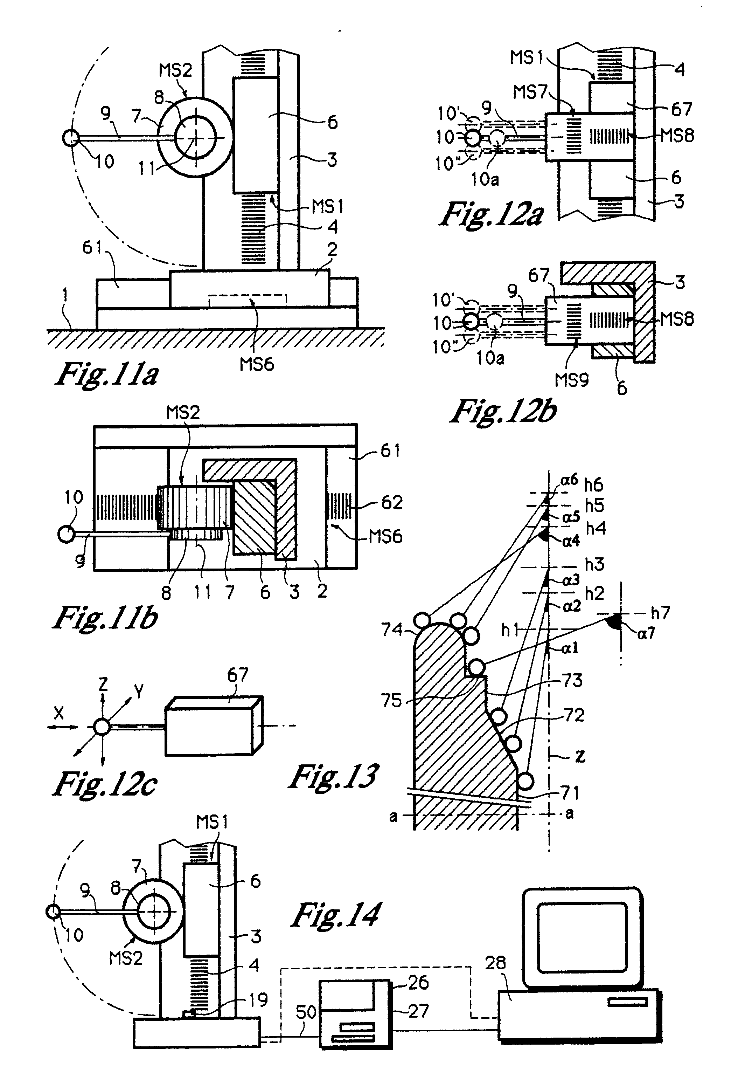

Die Messung von Durchmessern an Wellen und Bohrungen, bei welchen die lineare Verschiebbarkeit des Drehgebers 7, 41 entlang der Linearführung 12, 13 nicht ausreicht, bedingt eine Horizontalverschiebung des gesamten Vertikal/Horizontalmessgerätes entlang einer Geraden. Diese Verschiebbarkeit kann dadurch erreicht werden, dass das erfindungsgemässe Vertikal/Horizontalmessgerät in hergebrachter Art und Weise auf einem Luftkissen einem Lineal entlang verschoben wird. Erfindungsgemäss wird das Messgerät allerdings vorteilhafterweise gemäss den Fig. 11a und 11b auf einen Untersatz aufgesetzt, der im wesentlichen eine horizontale Längsführung 61 und einen Massstab 62 enthält. Ein mit dem Massstab 62 zusammenwirkendes lineares Messsystem MS6 ist vorteilhafterweise in die Basisplatte 2 eingebaut und mit dem Rechner 26 verbunden. Die Längsführung 61 muss spielfrei und gerade sein, da Führungsfehler in das Messresultat eingehen. Erfindungsgemäss eröffnet die Ausrüstung des Vertikal/Horizontalmessgeräts gemäss Fig. 11 mit einer Längsführung 61 aus keramischem Werkstoff vorteilhafterweise in Verbindung mit einem Magnetlager optimale Voraussetzungen. Die Magnetkraft muss dabei nur in horizontaler Richtung an die Längsführung 61 wirken, denn in vertikaler Richtung wirkt das Gewicht des Messgerätes. Zwischen der Basisplatte 2 und dem Untersatz kann zwecks leichter Verschiebbarkeit ein Luftkissen aufbaubar sein. Bei geringerer Anforderung an die Genauigkeit der Horizontalverschiebung des Messgerätes ist auch eine Längsführung mit Rollkörpern denkbar.

In den Fig. 12a, 12b und 12c ist eine Ausführungsvariante eines erfindungsgemässen Vertikal/Horizontalmessgerätes dargestellt, die an Stelle eines oder mehrerer rotativer Messsysteme MS2, MS6 einen Messkopf 67 verwendet, der vorteilhafterweise mehrere senkrecht zueinander stehende Messsysteme MS7, MS8 und MS9 enthält und dessen Messsonde 10 sich in mehreren Freiheitsgraden bewegen kann. Der Messkopf 67 ist auf dem Schlitten 6 befestigt. Die Wegkomponente der Messsonde 10 in der Verschiebungsrichtung des Schlittens 6 wird hier zum Betrag der Verschiebung des Schlittens 6 addiert, um den Verschiebungsweg der Messsonde 10 zu erhalten. Die Fig. 12a zeigt die Säule 3 mit dem Massstab 4 und der darauf verschiebbaren Baugruppe bestehend aus dem Schlitten 6 und dem Messkopf 67 in Seitenansicht, wogegen Fig. 12b dieselben Elemente in Draufsicht zeigt. Das Messsystem MS7 misst die parallele Verschiebung des Schaftes 9 und des Messkopfes 10 in der vertikalen Ebene, wogegen das Messsystem MS9 die parallele Verschiebung des Schaftes 9 und des Messkopfes 10 in der horizontalen Ebene misst. Die lineare Verschiebung des Schaftes 9 und der Messonde 10 entlang der Achse des Schaftes 9 wird durch das Messsystem MS8 gemessen. Selbstverständlich sind alle drei Messsysteme MS7, MS8 und MS9 mit dem Rechner 26 verbunden. Fig. 12c illustriert die durch die Messsonde 10 und den Schaft 9 durchführbaren Bewegungen innerhalb eines X;Y;Z-Koordinatensystems.

Fig. 13 veranschaulicht die Geometrie zur Vermessung eines Profils, beispielsweise an einer Schleifscheibe. Ausgehend von einer Bezugsebene 71 und beispielsweise der Achse a - a können Winkel und Lage der konischen Zone 72, der Abstand der Flanke 73, die Formabweichung und Lage der halbkreisförmigen Zone 74 und schliesslich der Radius des Zylinders 75 gemessen werden. Die Messresultate gehen aus den ermittelten Höhenabständen $h_1$ bis $h_7$ und den korrespondierenden Winkeln $\alpha_1$ bis $\alpha_7$ hervor. Es ist auch hier von Bedeutung, dass ein und dasselbe Messgerät für die Messung von horizontalen und vertikalen Abständen sowie von Form- und Lageabweichungen verwendet werden kann. Das Messobjekt, in der Zeichnung mit seiner Achse a - a horizontal dargestellt, kann auch mit seiner Achse a - a in vertikaler Lage vermessen werden, falls dies zweckmässig erscheint.

Fig. 14 zeigt, dass der Rechner 26, falls zweckmässig, getrennt von der Säule 3 und der Basisplatte 2, durch ein Kabel 50 mit den Messsystemen MS1 bis MS9 verbunden, angeordnet sein kann. Er bildet dabei vorteilhafterweise Teil eines Service-Blocks, in dem neben Anzeige, Tastatur, Stromversorgung und Druckluftquelle für Luftlager, weitere Elemente untergebracht sein können, die die Handhabung des Messgerätes vereinfachen oder spezielle Auswertungen der Messergebnisse ermöglichen. Insbesondere ist es empfehlenswert, wenn ein Drucker und eine Datenspeichereinheit ebenfalls Teil des Service-Blocks bilden. Dieser als alternativ auch das Messgerät als solches sind vorteilhafterweise über eine Normschnittstelle mit einem Rechner 28 oder Peripheriegeräten verbindbar.

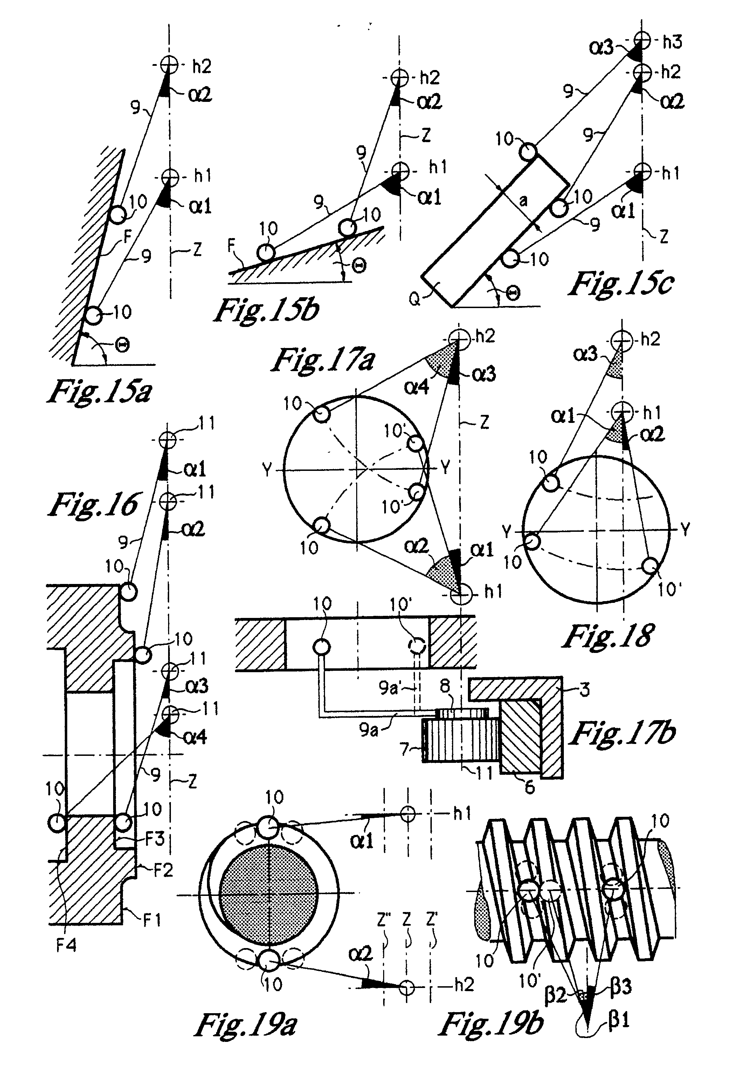

Die Fig. 15a, 15b und 15c illustrieren schematisch die Messung von Winkeln, in diesen Fällen von Neigungswinkeln $\theta$ gegenüber der horizontalen Bezugsebene. Mit der Drehachse 11 des Drehgebers 7 in Position $h_1$ wird die Fläche F mit der Messsonde 10 angetastet und der Winkel $\alpha_1$ gemessen und gespeichert. Nach Verschiebung der Drehachse 11 des Drehgebers 7 entlang der Linie Z in die Position $h_2$ wird ein zweiter Punkt der Fläche F angetastet. Aus den Koordinatenwerten $h_1$ und $h_2$ und den Winkelwerten $\alpha_1$ und $\alpha_2$ kann der Neigungswinkel $\theta$ der Fläche F berechnet werden. Fig. 15a und 15b zeigen verschiedene Neigungswinkel $\theta$ der Fläche F.

Fig. 15c zeigt schematisch die Messung des Neigungswinkels eines Quaders bezüglich der horizontalen Bezugsebene sowie die Bestimmung des Abstandes a zweier seiner Begrenzungsflächen durch Antasten von drei Punkten. Ausgehend von der Lage $h_1$ der Achse 11 des Drehgebers 7 wird die Messsonde 10 an die untere Fläche des quaders angelegt und der Wert des Winkels $\alpha_1$ gemessen und gespeichert. Nach Verschiebung der Drehachse 11 des Drehgebers 7 entlang der Achse Z in Position $h_2$ wird die untere Fläche des quaders ein zweites mal angetastet und der Winkelwert $\alpha_1$ und die Höhenkoordinate $h_2$ gemessen und gespeichert. Nach Verschiebung der Drehachse 11 des Drehgebers 7 entlang der Achse Z in eine Höhenkoordinate $h_3$ wird die Messsonde 10 an die obere Fläche des Quaders angelegt und der Winkel $_3$ gemessen. Unter Berücksichtigung der Tasterkonstanten, des Mittelpunktradius R der Messsonde 10 und der Antastrichtung können aufgrund der gemessenen und gespeicherten Werten $\alpha_{1-3}$ und $h_{1-3}$ der Neigungswinkel $\theta$ und der Abstand a zwischen den Begrenzungsflächen des Quaders berechnet und angezeigt werden.

Fig. 16 illustriert, wie an einem Werkstück horizontale Abstände paralleler vertikaler Flächen gemessen werden können. Mit der Messsonde 10 an die Fläche $F_1$ angelegt wird der Winkel $\alpha_1$ gemessen und gespeichert. Nach Verschiebung der Drehachse 11 des Drehgebers 7 entlang der Achse Z wird die Messsonde 10 an die Fläche $F_2$ angelegt und der Winkel $\alpha_2$ gemessen, worauf der horizontale Abstand zwischen den Flächen $F_1$ und $F_2$ berechnet und angezeigt werden kann. Nach nochmaliger Verschiebung der Drehachse 11 des Drehgebers 7 wird die Fläche $F_3$ angetastet, der Winkel $\alpha_3$ gemessen und der Abstand zwischen den Flächen $F_3$ und $F_1$ berechnet und angezeigt. Nach nochmaliger Verschiebung der Drehachse 11 des Drehgebers 7 kann schliesslich noch die rückseitig liegende Fläche $F_4$ angetastet, der Winkel $\alpha_4$ gemessen und der Abstand zwischen den Flächen $F_1$ und $F_4$ berechnet und angezeigt werden. Werden alle gemessenen Winkel $\alpha_1$ bis $\alpha_4$ gespeichert, so können die Abstände zwischen allen Flächen $F_1$ bis $F_4$ berechnet und angezeigt werden. Die Koordinaten der Drehachse 11 auf der Z-Achse sind bei derartigen Messungen irrelevant und brauchen daher nicht berücksichtigt zu werden.

Fig. 17 zeigt ein Verfahren zur Bestimmung des Durchmessers einer Bohrung, der Lage von deren Zentrum und von Formabweichungen vom theoretischen Kreis. In Fig. 17a ist dabei schematisch der Messablauf und in Fig. 17b die Anordnung von Säule 3, Schlitten 6, Drehgeber 7 mit Welle 8 und daran befestigtem abgewinkeltem Schaft 9a mit der Messsonde 10 dargestellt. Mit der Drehachse 11 des Drehgebers 7 in der Koordinatenlage h werden zwei Punkte der Mantelfläche der Bohrung angetastet und die Winkel$\alpha_1$ und $\alpha_2$ gemessen und gespeichert. Von der Koordinatenlage $h_2$ der Drehachse 11 des Drehgebers 7 aus, nach Verschiebung auf der Achse Z, werden zwei weitere Punkte der Mantelfläche der Bohrung angetastet und die Winkel$\alpha_3$ und$\alpha_4$ gemessen und gespeichert. Aus den Koordinatenwerten $h_1$ und $h_2$ sowie den Winkeln$\alpha_1$ bis$\alpha_4$ und unter Berücksichtigung der Konstanten der Messsonde 10 sowie deren Mittelpunktradius R kann der Durchmesser der Bohrung und die Lage der Bohrungsachse sowohl in Z- wie auch in Y-Richtung berechnet werden. Drei der gemessenen Punkte der Mantelfläche der Bohrung definieren den Durchmesser und die Lage des Zentrums der Bohrung in vertikaler und horizontaler Richtung. Weitere unter Verschiebung der Drehachse 11 des Drehgebers 7 entlang der Achse Z angetastete Punkte auf der Mantelfläche der Bohrung können zur Ermittlung der Formabweichung gegenüber eines durch drei Punkte definierten theoretischen Kreises benützt werden. Dasselbe Verfahren ist analog auch für die Messung von Aussendurchmessern anwendbar.

Fig. 18 illustriert ein weiteres Verfahren zur Bestimmung von Durchmesser und Lage des Zentrums einer kreisrunden Bohrung. Ein abgewinkelter Schaft 9a, wie in Fig. 7 und Fig. 17b dargestellt, trägt die Messsonde 10. Mit der Drehachse 11 des Drehgebers 7 in der Position $h_1$ wird die Mantelfläche der Bohrung an zwei Punkten angetastet, sodass die Winkel$\alpha_1$ und $\alpha_2$ gemessen werden können. Mit diesen zwei Punkten ist eine Sehne des kreisförmigen Querschnittes der Bohrung bestimmt. Nach Verschiebung der Drehachse 11 des Drehgebers 7 entlang der Achse Z in die Position $h_2$ und Antasten eines dritten Punktes der Mantelfläche der Bohrung wird der Winkel$\alpha_3$ gemessen, wodurch zwei weitere Sehnen bestimmt sind. Aus den Koordinatenwerten von $h_1$ und $h_2$ sowie den Winkeln$\alpha_1$ bis$\alpha_3$ und unter Berücksichtigung der Tasterkonstanten der Messsonde 10 sowie deren Mittelpunktradius R können der Durchmesser der Bohrung sowie die Lage von deren Achse sowohl in Z- wie auch in Y-Richtung berechnet werden. Dasselbe Verfahren kann analog ebenfalls für Aussendurchmessermessungen angewendet werden. Für dieses Verfahren ist allerdings Voraussetzung, dass der Querschnitt der Bohrung respektive des Aussendurchmessers kreisrund ist.

Die Fig. 19a und 19b illustrieren die Vermessung eines Gewindes mittels eines erfindungsgemässen Vertikal/Horizontalmessgerätes gemäss Fig. 10, bei dem der erste Drehgeber 7 mit der Welle 17 des zweiten Drehgebers 16 verbunden ist, der entsprechend dem Drehgeber 7 in Fig. 4, seinerseits rechtwinklig zur Säule 3 linear verschiebbar auf den Schlitten 6 montiert ist. Die Messonde 10 wird zuerst oben, wenn sich der Drehgeber 7 auf der Säule 3 in der Höhe $h_1$ befindet, zwischen zwei Flanken des Gewindes gelegt und durch eine lineare Verschiebung der Drehaschse 11 zwischen den Positionen $Z''$, $Z$ und $Z'$ über den höchsten Punkt des Flankendurchmessers geführt. Dabei werden neben der Höhe $h_1$ die Winkel$\alpha_1$ und $\beta_1$ des höchsten Punktes des Flankendurchmessers ermittelt und im Rechner gespeichert. Anschliessend wird die Messonde 10 in einer Höhe $h_2$ des Drehgebers 7 von unten in das Gewinde gelegt, worauf in analoger Weise der tiefste Punkt des Flankendurchmessers vermessen wird. Dabei werden neben der Höhe $h_2$ die Winkel$\alpha_2$ und $\beta_2$ ermittelt und im Rechner gespeichert. Da die beiden vermessenen Flankendurchmesserpunkte definitionsgemäss um $180°$ versetzt sind, kann unter Berücksichtigung der Tasterkonstanten aus den Winkeln $\alpha_2$ und $\alpha_2$ sowie der linearen Verschiebung des Schlittens 3 zwischen den Höhen $h_1$ und $h_2$ der Flankendurchmesser und anhand der Winkel $\beta_1$ und $\beta_2$ die halbe Steigung des Gewindes berechnet werden. Zur Messung über mehrere Steigungen wird der Winkel $\beta_3$ gemessen.

In ähnlicher Weise eignet sich eine derartige Ausführungsvariante eines erfindungsgemässen Vertikal/Horizontalmessgerätes auch für die Vermessung von Zahnrädern. In dieser Art und Weise können auch Innengewinde und Innenverzahnungen gemessen werden, wobei es dabei notwendig sein kann, einen abgewinkelten Schaft 9a zu verwenden, um die Messpunkte mit der Messsonde 10 anfahren zu können. Ähnliche Messungen sind mit dem Messkopf 67 gemäss Fig. 12 möglich.

Es kann zweckmässig oder notwendig sein, das ganze Messgerät auf der horizontalen Bezugsebene 1 parallel zu verschieben, um es bezüglich des Messobjektes ausgerichtet zu positionieren. Zu diesem Zwecke können bekannte Mittel wie Längsführungen oder Pantographen vorgesehen werden. Es können aber auch Friktionsrollen in die Basisplatte 2 eingebaut werden, die federbelastet auf der Bezugsebene 1 abrollen und auf diese Weise das Messgerät zumindest annähernd parallel führen.Die totale Federkraft dieser Rollen soll dabei kleiner sein als die Gewichtskraft des Messgerätes, sodass eine genaue Auflage der Basisplatte auf der Bezugsebene 1 gewährleistet ist. Im Zuge der Automatisierung von Mesungen kann die Verschiebung motorisch erfolgen.

Der Fachmann ist in der Lage, anhand der hiervor beschriebenen ausgewählten Anwendungsmöglichkeiten der diversen Ausführungsvarianten eines erfindungsgemäsen Vertikal/Horizontalmessgerätes die weiteren, weit über die Möglichkeiten eines herkömmlichen Höhenmessgerätes hinausgehenden Einsatzmöglichkeiten zu erkennen, ohne dass diese hier beschrieben werden müssten.

Er erkennt auch, dass das mit der Messsonde wirkverbundene Messsystem gegenüber dem Schlitten folgende Freiheitsgrade, Bewegungs- oder Verschiebemöglichkeiten aufweisen kann:
- translatorische Verschiebung in der Horizontalebene, entweder in der X-Achse oder in der Y-Achse oder in beiden Achsen
- Schwenkbewegung in der Horizontal oder der Vertikalebene oder in beiden Ebenen um einen Drehpunkt
- freie translatorische und rotative Bewegung in der Horizontalebene, also quasi schwimmend, gegebenenfalls mit Luft- und Magnetlager
- Schwenkbewegung um einen Drehpunkt und translatorische Verschiebung in einer oder mehreren Achsen.

Der Fachmann erkennt, dass das erfindungsgemässe Vertikal/Horizontalmessgerät eine völlig neue Generation von Messgeräten begründet. Es ist selbstverständlich, dass einzelne Komponenten der beschriebenen Ausführungsvarianten erfindungsgemässer Vertikal/Horizontalmessgeräte im Detail anders konstruiert werden können, als dies aus der Zeichnung oder der obigen Beschreibung entnommen werden kann. Zudem können weitere Ausführungsvarianten erfindungsgemässer Vertikal/Horizontalmessgeräte vorgesehen werden, die beispielsweise mehrere miteinander wirkverbundene Drehgeber und/oder Lineartaster enthalten. Es ist dabei bezüglich der Erfindung unabhängig, ob nur lineare oder ein lineares Messsystem in Form des Schlittens auf der Säule und ein oder mehrere Messsysteme bestehend aus linearen Tastern und/oder rotativen Drehgebern zur Anwendung gelangen. Der Fachmann erkennt allerdings, dass die Verwendung von zumindest einem Drehgeber als Messsystem wesentliche Vorteile bietet.

**Ansprüche**

1. Vertikal/Horizontalmessgerät, umfassend zumindest eine Säule (3) mit darauf linear verschiebbarem Schlitten (6), wobei die Säule (3) eine Massverkörperung trägt und der Schlitten (6) ein erstes Messsystem (MS1) umfasst, mittels welchem die Lage des Schlittens (6) auf der Säule (3) bestimmbar ist, dass der Schlitten (6) mit einem auf ihm angeordneten zweiten Messsystem (MS2) wirkverbunden ist, das eine Messonde (10) beinhaltet, deren Lage bezüglich dem Schlitten (6) mittels des zweiten Messsystems (MS2) und einem Rechner (26) bestimmt und definierbar ist, dadurch gekennzeichnet, dass die Messrichtung des zweiten Messsystems (MS2) zumindest in Messrichtung des ersten Messsystems (MS1) festlegbar ist und dass der Rechner (26) so ausgelegt ist, dass er die Messwerte der beiden Messsysteme (MS1, MS2) in Abhängigkeit von deren Messrichtungen mittels vorbestimmten mathematischen Operationen zur Berechnung des Abstandes der Messonde (10) von einer Bezugsebene (1) verbindet.

2. Messgerät nach Anspruch 1, dadurch gekennzeichnet, dass die in einem oder mehreren Freiheitsgraden bewegliche Messsonde (10) mit einem linearen Messkopf (67) verbunden ist, der auf dem Schlitten (6) befestigt ist und einen oder mehrere durch rechtwinklig zueinander angeordnete lineare mit dem Rechner (26) verbundene Messsysteme (MS7, MS8, MS9) aufweist. (Fig. 12)

3. Messgerät nach Anspruch 2, dadurch gekennzeichnet, dass ein Freiheitsgrad die gleiche Richtung aufweist wie die Verschieberichtung des Schlittens (6). (Fig. 12)

4. Messgerät nach Anspruch 2, dadurch gekennzeichnet, dass der Messkopf (67) senkrecht zur Verschieberichtung des Schlittens (6) schwenk- oder verschiebbar ist. (Fig. 12)

5. Messgerät nach Anspruch 1, dadurch gekennzeichnet, dass die Messsonde (10) über einen Schaft (9) mit einem Drehgeber (7) verbunden ist, der ein rotatives zweites Messsystem (MS2) beinhaltet und mit dem Schlitten (6) wirkverbunden ist.

6. Messgerät nach Anspruch 5, dadurch gekennzeichnet, dass die Drehachse (11) des Drehgebers (7) rechtwinklig oder parallel zur Verschieberichtung des Schlittens (6) auf der Säule (3) steht. (Fig. 1 und 2)

7. Messgerät nach Anspruch 5, dadurch gekennzeichnet, dass die Messsonde (10) an einem Schaft (45) befestigt ist, der drehbar auf einem Arm (43) gelagert ist, der seinerseits mit dem Drehgeber (41) wirkverbunden ist, und dass jede Drehung des Schaftes (45) mittels einer Übertragungsmechanik (51, 52, 53) auf den Drehgeber (41) übertragen wird. (Fig. 9)

8. Messgerät nach Anspruch 5 oder 7, dadurch gekennzeichnet, dass der Drehgeber (7, 41) auf der Welle (17) eines zweiten Drehgebers (16) mit einem Messsystem (MS5) zur Messung der Drehung um dessen Drehachse (18) sitzt. (Fig. 10)

9. Messgerät nach Anspruch 8, dadurch gekennzeichnet, dass der zweite Drehgeber (16) senkrecht zu seiner Drehachse (18) schwenkbar ist. (Fig. 10)

10. Messgerät nach Anspruch 5, 7 oder 9, dadurch gekennzeichnet, dass der oder die Drehgeber (7, 16, 41) rechtwinklig zu der Verschieberichtung des Schlittens (6) linear verschiebbar ist, resp. sind.

11. Messgerät nach Anspruch 10, dadurch gekennzeichnet, dass die lineare Verschiebung mittels eines mit dem Rechner verbundenen Messsystems (MS3) messbar ist. (Fig. 3, 4)

12. Messgerät nach Anspruch 5 oder 9, dadurch gekennzeichnet, dass der Drehgeber (7, 41, resp. 16) in einer Ebene senkrecht zu seiner Messebene (21, 22, 47, 48) um eine Drehachse (24, 25) schwenkbar ist. (Fig. 5, 6, 9)

13. Messgerät nach einem der Ansprüche 5 bis 12 , dadurch gekennzeichnet, dass die Messonde (10) über einen abgewinkelten Schaft (9a) mit dem Drehgeber (7) oder Arm (43) verbunden ist. (Fig. 7)

14. Messgerät nach Anspruch 1, dadurch gekennzeichnet, dass es mit einer Längsführung (61) wirkverbindbar ist, derart, dass es parallel zu einer Bezugsebene (1) entlang einer geraden Linie verschiebbar ist. (Fig. 11)

15. Messgerät nach Anspruch 14, dadurch gekennzeichnet, dass die Verschiebung mittels eines Messsystems (MS6) messbar ist. (Fig. 11)

16. Messgerät nach jedem der Ansprüche 1 bis 14, dadurch gekennzeichnet, dass der Schlitten (3), die Drehgeber (7, 16, 41) und/oder der lineare Messkopf (67) sowie gegebenenfalls die Basisplatte (2) in der Längsführung (61) durch den Rechner (26) kontrolliert mechanisch, elektromechanisch, pneumatisch, hydraulisch oder magnetisch verstellbar sind.

17. Messgerät nach den vorangehenden Ansprüchen, dadurch gekennzeichnet, dass der Rechner (26) die Signale eines jeden Messsystems (MS1 - MS9) individuell erfasst und nach vorbestimmten Kriterien, Konstanten und Variablen verarbeitet und anzeigt und die berechneten Ergebnisse nach vorbestimmten Kriterien miteinander verbindet.

18. Messgerät nach einem der Ansprüche 1 bis 15, dadurch gekennzeichnet, dass die Messkraft des Messkopfes (67) resp. der Drehgeber (7, 16, 41) motorisch gemäss vorbestimmten Kriterien einstellbar ist.

19. Messgerät nach einem der Ansprüche 1 bis 15, dadurch gekennzeichnet, dass das mit der Messonde (10) wirkverbundene Messsystem (MS2) auf einer Ebene frei verschiebbar ist.

20. Messgerät nach Anspruch 1, dadurch gekennzeichnet, dass die Säule (3) aus keramischem Material besteht.

21. Messgerät nach Anspruch 20, dadurch gekennzeichnet, dass die Säule (3) Substrat einer Massverkörperung ist.

22. Messgerät nach Anspruch 20, dadurch gekennzeichnet, dass der Schlitten (6) mittels zumindest eines Magnetlagers auf der Säule (3) positionierbar ist.

23. Messgerät nach einem der Ansprüche 1 bis 22, dardurch gekennzeichnet, dass die Säule Auflagepunkte aufweist derart, dass das Messgerät sowohl in vertikaler als auch in horizontaler Lage der Säule (3) einsetzbar ist. (Fig. 1, 8)

24. Verfahren zum Betrieb eines Vertikal/Horizontalmessgerätes gemäss Anspruch 1, dadurch gekennzeichnet, dass die Komponente des Messwertes des zweiten Messsystems (MS2) in Messrichtung des ersten Messsystems (MS1) zum Messwert des ersten Messsystems (MS1) addiert wird.

25. Verfahren zum Betrieb eines Vertikal/Horizontalmessgerätes gemäss Anspruch 1, dadurch gekennzeichnet, dass die beiden Messsyteme (MS1, MS2) in rechtwinklig zueinander stehenden Richtungen wirken.

26. Verfahren zum Betrieb eines Vertikal/Horizontalmessgerätes gemäss Anspruch 1, dadurch gekennzeichnet, dass die Messwerte der beiden Messsyteme (MS1, MS2) zur Berechnung von zweidimensionalen Koordinaten in einer Ebene verwendet werden.

27. Verfahren nach einem der Ansprüche 24 bis 26, dadurch gekennzeichnet, dass die Messwerte der Messsysteme (MS1, MS2) zur Anzeige gebracht und/oder registriert werden, sobald die Summe der Messwerte der Messsysteme (MS1, MS2) innerhalb einer vorbestimmten Toleranz oder während einer vorbestimmten Zeit konstant ist obwohl sich die Einzelwerte beider Messsysteme noch ändern oder wenn Messwertänderungen beider System gleich gross und mit umgekehrten Vorzeichen sind, oder wenn eine vorbestimmte Messkraft oder ein Drehmoment erreicht wird.

*Fig.1a*

*Fig.2a*

*Fig.2b*

*Fig.1b*

*Fig.3*

*Fig.4*

*Fig.6*

*Fig.5*

*Fig.7*

**Fig.8a**

**Fig.8b**

**Fig.9a**

**Fig.9b**

**Fig.9c**

**Fig.10**

...

*Fig.11a*

*Fig.11b*

*Fig.12a*

*Fig.12b*

*Fig.12c*

*Fig.13*

*Fig.14*

Fig.15a

Fig.15b

Fig.15c

Fig.16

Fig.17a

Fig.17b

Fig.18

Fig.19a

Fig.19b

| | Europäisches Patentamt | EUROPÄISCHER RECHERCHENBERICHT | Nummer der Anmeldung |
|---|---|---|---|
| | | | EP 90 81 0700 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | PATENT ABSTRACTS OF JAPAN vol. 6, no. 156 (P-135)(1034) 17 August 1982, & JP-A-57 74609 (KOSAKA KENKYUSHO K.K.) 10 Mai 1982, * das ganze Dokument * --- | 1, 5, 6, 8, 9, 12, 19 | G01B21/04 G01B5/00 G01B5/06 |
| X,Y | DE-A-3406045 (MORA FABRIK FUR MESSGERÄTE HELMUT FREUND GMBH) * Seite 7, Absatz 2 - Seite 14; Ansprüche 1-9; Figuren 1-4 * --- | 1-6, 8-11, 14-16, 18, 19, 25 | |
| Y | DE-U-8717320 (ZETT MESS TECHNIK GMBH) * Seite 6, Absatz 6 - Seite 7; Ansprüche 1-6; Figuren 1, 2 * ----- | 11, 17, 19 | |

| | RECHERCHIERTE SACHGEBIETE (Int. Cl.5) |
|---|---|
| | G01B |

Der vorliegende Recherchenbericht wurde für alle Patentansprüche erstellt

| Recherchenort | Abschlußdatum der Recherche | Prüfer |
|---|---|---|
| DEN HAAG | 09 NOVEMBER 1990 | BATTESON A. |

EPO FORM 1503 03.82 (P0403)